# EUROPEAN PATENT SPECIFICATION

(11) **EP 1 351 799 B1**
(45) Date of publication and mention of the grant of the patent: **11.04.2012**
(21) Application number: 01988331.3
(22) Date of filing: 17.12.2001
(51) Int. Cl.: B23P 19/02

(54) **IMPROVED METAL-TO-METAL CONNECTIONS**
VERBESSERTE METALLVERBINDUNGEN
LIAISONS METAL-METAL AMELIOREES

(30) Priority: 18.12.2000 US 256303 P
(43) Date of publication of application: 15.10.2003
(73) Proprietor: DENTSPLY International Inc., York, PA 17405-0872 (US)
(72) Inventor: NOVAK, Eugene J., Deerfield, IL 60015 (US); PAPANEK, Tom, Lake Forest, IL 60045 (US); AYZENSHETYN, Mikhail, Buffalo Grove, IL 60089 (US); ZDANOWSKI, Chester, Westmont, IL 60559 (US)
(74) Representative: Wächtershäuser, Günter
(86) International application number: PCT/US2001/049062
(87) International publication number: WO 2002/049796

(56) References cited:
- GB-A- 1 515 951
- JP-A- 8 270 409
- JP-A- 11 262 822
- US-A- 4 318 695
- PATENT ABSTRACTS OF JAPAN vol. 2000, no. 18, 5 June 2001 (2001-06-05) & JP 05 172208 A (MITSUBISHI MATERIALS CORP;PRESS & STANZWERK AG), 9 July 1993 (1993-07-09)
- PATENT ABSTRACTS OF JAPAN vol. 2000, no. 02, 29 February 2000 (2000-02-29) & JP 11 330284 A (NIPPON INTER ELECTRONICS CORP), 30 November 1999 (1999-11-30)
- PATENT ABSTRACTS OF JAPAN vol. 014, no. 023 (M-920), 17 January 1990 (1990-01-17) & JP 01 264726 A (SUMITOMO ELECTRIC IND LTD), 23 October 1989 (1989-10-23)

## Description

### TECHNICAL FIELD

The present invention generally relates to improvements in precision material-to-material, such as metal-to-metal, connections. More particularly, the invention relates to connections between two metal parts, wherein each part is sized so as to accommodate and facilitate the connection, such as the press-fit of a bearing upon a rotatable shaft. Specifically, the invention relates to laser marking, scribing, cutting, or otherwise machining one of the parts to form a groove or other depression positioned proximate to a quantity of excavated material removed during formation of the groove or depression. The second part is then fitted to the first part such that the excavated material at least partially fills any gaps between the two parts.

### BACKGROUND OF THE INVENTION

Dental bur tube assemblies with bearings press fit to the bur tube are known from US-A 4,318,695.

Precision fit between metal parts if often required in a number of industrial applications. For example, the fit between bearings or races and rotating shafts is often required to have high tolerances. In the case of a bur tube for a dental handpiece, a press fit is often used between for example, the bur tube (or shaft) and a bearing inner race. The outside diameter is desired to be greater than the inside diameter of the race to make the press-fit connection secure. Tolerances of 50 to 100 millionths of an inch is often required.

It is the case with many such shaft connections, that an adhesive is often used between the shaft and the fitted component. While this may fill any gaps between the two metal parts, it is often not desired to use an adhesive in some applications. In the case of a dental handpiece, the area in which the adhesive is to be placed is often very small, making precise application of the adhesive difficult. Further, dental handpieces must be subjected to repeated sterilization procedures over their useful life, often under high temperature and pressure. Such environments will degrade many adhesives.

It is also the case that with such close tolerance requirements, that a number of metal parts will be measured and sorted based upon size. The metal parts can then be matched to appropriately and correspondingly sized counterparts. This is a time consuming and expensive procedure at best.

A need exists therefore, for an improvement in connections between metal parts. The improvement should meet the need of filling gaps between metal parts and otherwise facilitating connections, particularly press-fit type connections.

### SUMMARY OF THE INVENTION

It is therefore, an object of the present invention to provide metal-to-metal connections.

It is another object of the invention to provide such connections between parts that are sized to accommodate and facilitate such connections.

These and other objects of the invention, which will become apparent from the present discussion, are accomplished by the invention as hereinafter described and claimed.
The present invention provides a method as defined by claim 1.

In general, a method of fitting together two metal parts having metal-to-metal physical contact between opposing surfaces thereon, comprises the steps of creating a groove, hole, perforation or other excavation in a first one of the parts, such that an amount of excavated material is removed from the excavation yet which remains adjacent and proximate to the excavation; and fitting the second one of the part to the first part such that an amount of the excavated material is positioned between the two parts when they are in their fitted together relation.

### BRIEF DESCRIPTION OF THE DRAWINGS

Fig. 1 is a perspective view of a bur tube or shaft for a dental handpiece, having laser markings according to the present invention.

Fig. 2 is a perspective, exploded view of the bur shaft of Fig. 1, also showing exemplary component parts used with a bur shaft assembly.

Fig. 3 is a side, plan view of the assembled bur shaft assembly of Fig. 2.

Fig. 4 is a close-up view of a portion of the bur shaft of Fig. 1, showing the laser marking in detail.

Fig. 5 is a closer view as in Fig. 4, showing the laser marking and showing excavated material adjacent thereto.

### PREFERRED EMBODIMENTS FOR CARRYING OUT THE INVENTION

The present invention has application to the joining or connecting of two metal objects each having at least one surface in an opposed and physically contacting relationship the other such surface. The invention has particular application to the connection of such metal-to-metal parts wherein the size or contours of each part is selected so as to facilitate or make the connection. As an example, when a metal part is press-fit to another, as when a bearing is press fit to a shaft, the size of each component part is critical in determining the strength of the press-fit connection.

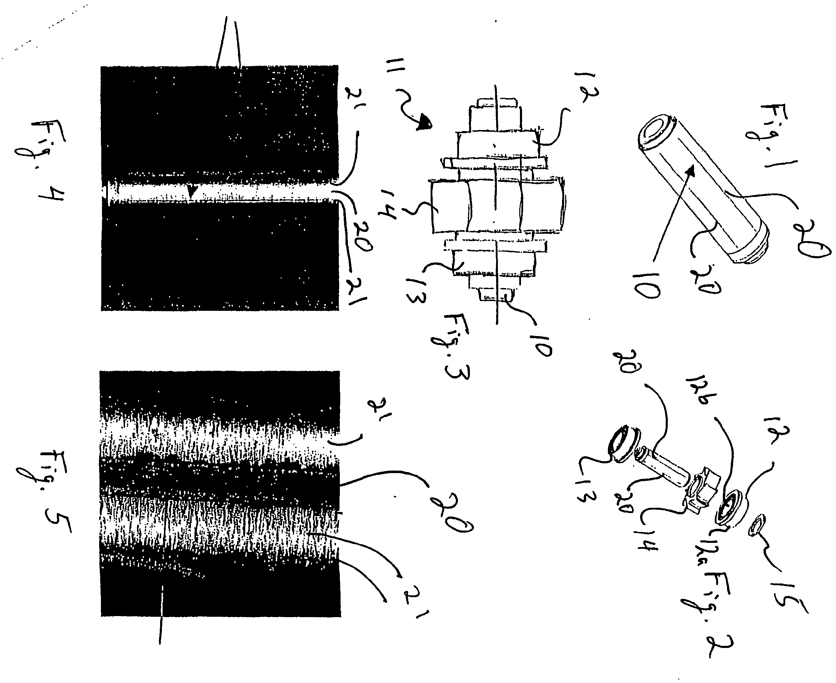

The present invention will also be exemplified herein with reference to a dental bur tube or shaft 10 as shown on the drawings. Bur tube 10 is of any conventional design. As is common in the dental handpiece art, bur tube 10 is included in a bur tube assembly 11 as is generally shown completed in Fig. 3, and in an exploded view in Fig. 2. Bur tube assembly 11 may include for example, lower bearing 12, upper bearing 13, turbine 14 and stop washer 15.

Components of bur tube assembly 11 generally have an outer surface and an inner surface. For example, lower bearing 12 has an outer surface 12a and an inner surface 12b. Inner surface 12b will physically contact bur tube 10 when in the assembled position as shown in Fig. 3.

As discussed above, the dimensions of inner diameter of lower bearing 12 and of bur tube 10, are critical in determining the efficacy of the contact between bur tube 10 and lower bearing 12. If carefully machined or otherwise fabricated, the contact between the two parts can be a press-fit or a friction fit. With small dimensions as encountered in the dental handpiece art, and indeed with any such connections no matter what the size, careful sizing is difficult. There are often gaps between two such parts as lower bearing 12 and bur tube 10. It will also be appreciated that the present invention is useful with connections other than to correct imperfections. The present invention is useful for connecting materials asuch as metals, even when the same have been machined to very high and precise standards.

According to the present invention, at least one and preferably a plurality of laser markings 20 are made in bur tube 10. Markings 20 may be of any depth, size, shape or location, all such parameters varying according to the end use of the actual product. One useful marking 20 for bur tube 10, is a plurality of linear laser markings 20 positioned axially on bur tube 10. By "laser marking" it is meant that an amount of the underlying material is grooved, gouged, displaced or otherwise excavated, in a manner such that an amount of material or excavate 21 is removed from the excavation site, and is pushed or otherwise deposited adjacent or proximate to the excavation site, such as laser marking 20. It will be appreciated that laser marking may be accomplished in any otherwise conventional manner, by any conventional device by use of lasers. One useful laser device is available from GSI Lumonics, Model HM 1400 YAG.

It is believed that excavate 21 that forms adjacent to laser marking 20 will be softer than the material of underlying structure from which it is removed, owing to the thermal or other effects induced by the action of the laser.

It is to be appreciated that any means of excavating laser-marking 20 is within the scope of the invention. For small precision parts such as bur tube 10, a laser is preferred.

By being softer than the material from which it is formed, excavate 21 is more pliable than the metal of the underlying structure. As such, when another surface is brought into contact with excavate 21, excavate 21 may be deformed thereby. For example, when lower bearing 12 is press-fit into bur tube 10, excavate 21 will be deformed therebetween, filling any gaps between lower bearing 12 and bur tube 10. Of course, such excavate 21 is useful for filling gaps between any structures, such as upper bearing 13, turbine 14 and stop washer 15. It is also to be appreciated that because excavate 21 is softer than the metal from which it is originally removed, the interior surface 12b of lower bearing 12 will not be deformed by its physical interaction with excavate 21.

With bur tube 10, the present invention will improve the press fit connection between all components of the spinning dental handpiece turbine/rotor assembly. It will not deform the internal surface of a bearing's inner race 12b and turbine 14 as current press fit technology, and therefore reduces noise and increase life of the handpiece product.

More specifically, bur tube assembly 11 has axial laser marking passes 20 on the outside surface of the bur tube 10. It provides exposure of bur tube 10 material above the normal grind surface. Therefore, this increases the outside diameter (OD) of bur tube 10 to a size larger than the lower bearing 12 (or upper bearing 13, turbine 14, and the like) inside diameter (ID). This created interference provides necessary press fit condition between bur tube 10 and other components, such as bearings 12 and 13 and turbine 14.

One preferred material is stainless steel from which dental bur tubes, such as bur tube 10 are conventionally fabricated.

Therefore, according to the present invention, press fit conditions for bearings and turbines can be achieved without any additional machining, force measurement and selectivity of components. The invention will also provide secure positioning and required performance for all set assembly components.

It is evident therefore, that the objects of joinery are carried out by the invention as herein described. All possible aspects of the invention beyond the best mode have not been necessarily described, and the scope of the invention shall only be determined by the following claims.

## Claims

1. A method of joining a bur tube for a dental handpiece and a further component, wherein each of the bur tube and the further component has an opposing and physically contacting surface therebetween, the method being **characterised by** comprising the steps of:
(a) laser marking at least one of the surfaces to create an excavation site, so as to form an amount of excavate material proximately to said excavation site, wherein said step of marking to form said excavate material causes said excavate material to be softer than the material from which it is excavated;
(b) moving each of the parts into their joined position such that an amount of said excavate material is impinged between the two parts and is deformed therebetween.

2. The method of claim 1, wherein the further component is a bearing.

## Patentansprüche

1. Verfahren zum Verbinden einer Bohrerhülse eines Dentalhandstücks mit einer weiteren Komponente, wobei die Bohrerhülse und die weitere Komponente jeweils sich physisch kontaktierende Gegenflächen aufweisen, wobei das Verfahren **dadurch gekennzeichnet ist, dass** es die folgenden Schritte umfasst:
(a) Laser-Markierung mindestens einer der Flächen, um eine Abtragstelle zu bilden, sodass eine Menge an Abtragmaterial rund um die Abtragstelle gebildet wird, wobei dieser Schritt eines Markierens, um das Abtragmaterial zu bilden, dazu führt, dass das Abtragmaterial weicher ist als das Material aus dem dieses abgetragen wurde;
(b) Bewegen jedes der Teile in deren verbundene Position sodass eine Menge des Abtragmaterials zwischen den beiden Teilen beaufschlagt und dazwischen deformiert wird.

2. Das Verfahren nach Anspruch 1, wobei die weitere Komponente ein Lager ist.

## Revendications

1. Procédé de raccord d'une douille pour fraise dentaire pour une pièce à main dentaire et d'un autre composant, dans lequel chaque élément parmi la douille pour fraise dentaire et l'autre composant présente, par rapport à l'autre, une surface opposée et en contact physique, le procédé étant **caractérisé par** les étapes qui consistent :
(a) à marquer au laser au moins l'une des surfaces pour créer un site d'excavation, de sorte à former une quantité de matériau excavé à proximité dudit site d'excavation, dans lequel ladite étape de marquage destinée à former ledit matériau excavé rend ledit matériau excavé plus souple que le matériau à partir duquel il est excavé ;
(b) à faire déplacer chacune des parties dans leur position de raccord de sorte qu'une quantité dudit matériau excavé soit empiétée entre les deux parties et soit déformée entre elles.

2. Procédé de la revendication 1, dans lequel l'autre composant est un palier.
